# EUROPÄISCHE PATENTANMELDUNG

(11) **EP 2 192 533 A1**
(43) Veröffentlichungstag der Anmeldung: **02.06.2010**
(21) Anmeldenummer: 09013877.7
(22) Anmeldetag: 05.11.2009
(51) Int. Cl.: G06Q 10/00, G06Q 20/00

(54) **Verfahren und Vorrichtung zur Steuerung des Warenstromes**

(30) Priorität: 22.11.2008 DE 102008058643
(71) Anmelder: Aldi Einkauf GmbH & Co. oHG, 45476 Mülheim/Ruhr (DE)
(72) Erfinder: Ernst Peter, 45478 Mülheim (DE); Ochsenschläger Robert, 45470 Mülheim (DE)
(74) Vertreter: Nunnenkamp, Jörg

(57) **Zusammenfassung**

Gegenstand der vorliegenden Erfindung sind ein Verfahren und eine Vorrichtung zur Steuerung des Warenstromes von einer Zentrale (1) zu einer oder mehreren örtlich entfernten Filialen (2a bis 2d). Dabei werden ausgewählte Waren (3) mittels einer Warenerfassanlage (5) in der betreffenden Filiale (2a bis 2d) im Hinblick auf ihre warenspezifischen Daten ausgewertet und in Verbindung mit filialspezifischen Daten in einen Dispositionsvorschlag (16) umgesetzt.

## Beschreibung

Die Erfindung betrifft ein Verfahren zur Steuerung des Warenstromes von einer Zentrale zu einer oder mehreren örtlich entfernten Filialen.

In der Praxis werden solche Verfahren üblicherweise eingesetzt, um eine Filiale mit ausgewählten und zuvor bestellten Waren fristgerecht zu beliefern. Das geschieht meistens durch eine vorherige telefonische oder anderweitige Bestellung seitens der Filiale an die Zentrale. Das hat sich grundsätzlich bewährt.

Daneben kennt man beispielsweise durch die DE 202 07 903 U1 ein System zum Verkaufen von Konsumgütern. Hier wird mit Wertmarken gearbeitet, die von einem Kunden nach Bezahlung gegen den gewünschten Artikel in einer Ausgabeeinrichtung getauscht werden. Auf diese Weise versucht man insbesondere einem Verlust des betreffenden Artikels durch beispielsweise Diebstahl entgegenzuwirken,

Die in der Vergangenheit verfolgten Vorgehensweisen können nicht rundherum befriedigen. Denn sofern es um die Steuerung des Warenstromes von beispielsweise verderblichen Waren wie Obst oder Gemüse geht, sind Verbesserungen erforderlich. Tatsächlich zeichnen sich solche verderblichen Waren einerseits durch eine nur begrenzte Haltbarkeit von manchmal lediglich einem Tag aus und hängt andererseits die Verfügbarkeit solcher Waren eng mit der Kundenzufriedenheit zusammen. Man steht hier also vor dem Problem, einen hohen Servicegrad, d. h. eine große Verfügbarkeit über den gesamten Tag des betreffenden Produktes oder der Ware zu gewährleisten und gleichzeitig die Abschreibungskosten aufgrund eines Verlustes der Ware zu minimieren. Aus diesem Grund hat es in der Vergangenheit bereits Ansätze gegeben, so genannte Bestellmengenoptimierungen vorzunehmen. Die bisherigen Versuche können jedoch nicht rundherum befriedigen,

Der Erfindung liegt folglich das technische Problem zugrunde, ein Verfahren und eine Vorrichtung zur Steuerung des Warenstromes von einer Zentrale zu einer oder mehreren örtlich entfernten Filialen anzugeben, mit deren Hilfe ein hoher Servicegrad erreicht wird und zugleich die Abschreibungskosten minimiert werden.

Zur Lösung dieser technischen Problemstellung ist Gegenstand der Erfindung ein Verfahren zur Steuerung des Warenstromes von einer Zentrale zu einer oder mehreren örtlich entfernten Filialen, wonach ausgewählte Waren mittels einer Warenerfassanlage in der betreffenden Filiale im Hinblick auf ihre warenspezifischen Daten ausgewertet und in Verbindung mit filialspezifischen Daten in einen Dispositionsvorschlag umgesetzt werden.

Im Rahmen der Erfindung werden also zunächst einmal ausgewählte Waren in einer oder mehreren Filialen untersucht, und zwar primär im Hinblick auf die Produktart und Verkaufsmenge. Aus der Verkaufsmenge bzw. aus den Verkaufszahlen, die mit Hilfe der Warenerfassanlage ermittelt werden, lassen sich dann die warenspezfischen Daten erzeugen. Diese warenspezifischen Daten spiegeln also wenigstens die Produktart, also die spezifische Ware, und deren Verkaufsmenge in einem bestimmten Zeitraum (beispielsweise einer Stunde, einem Tag, einer Woche etc.) wider. Darüber hinaus mögen die warenspezifischen Daten ggf. noch eine Artikelnummer und den Preis der ausgewählten Ware beinhalten. Hierbei kann es sich um den Einkaufspreis und/oder den Verkaufspreis handeln.

Darüber hinaus mögen in die warenspezifischen Daten noch der Verkaufszeitpunkt des ausgewählten Produktes bzw. der ausgewählten Ware und/oder die Gebrauchsdauer der ausgewählten Ware einfließen. Diese sämtlichen warenspezifischen Daten (Produktart und Verkautsmenge sowie ggf. Artikelnummer und/oder Preis und/oder Verkaufszeitpunkt und/oder Gebrauchsdauer) lassen sich in einem Warendatensatz ablegen. Um diesen Warendatensatz zu erzeugen, steht die Warenerfässanlage zur Verfügung, bei welcher es sich vorteilhaft um eine oder mehrere Kassieranlagen in der Filiale handelt. Kommen mehrere Kassieranlagen in der jeweiligen Filiale zum Einsatz, so werden die sämtlichen zu der ausgewählten Ware gehörigen warenspezfischen Daten für die betreffende Filiale zusammengefasst und in dem vorerwähnten Warendatensatz abgelegt.

Die Gebrauchsdauer der ausgewählten Ware bildet sowohl Lebensdauerwerte als auch die jahreszeitliche Verfügbarkeit der betreffenden Ware ab. Das heißt, sofern es sich bei der ausgewählten Ware um eine verderbliche Ware wie beispielsweise Obst oder Gemüse handelt, gibt die Gebrauchsdauer an, wie lange die betreffende Ware in der Filiale angeboten werden kann (beispielsweise einen Tag oder mehrere Tage). Die jahreszeitliche Verfügbarkeit drückt aus, innerhalb welcher Jahreszeit die Ware überhaupt verfügbar ist, beispielsweise nur im Sommer oder nur im Frühjahr etc..

Der Warendatensatz bzw. die warenspezifschen Daten in der betreffenden Filiale werden nun mit filialspezifischen Daten flankiert. Bei diesen filialspezifischen Daten handelt es sich in der Regel um solche, die mittels wenigstens eines (externen) Sensors sowie ggf. durch eine externe Eingabe erzeugt und in einem Filialdatensatz abgelegt werden. Bei den (externen) und der jeweiligen Filiale zugeordneten Sensoren kann es sich im einfachsten Fall um eine Uhr bzw. Funkuhr und/oder einen Temperatursensor (Außentemperatur und/oder Innentemperatursensor) und/oder ein Zeiterfassungsgerät und/oder einen Feuchtesensor und/oder eine externe Eingabeeinheit und/oder filialspezifische Wetterprogrammeinheit und/oder eine filialspezifische Kalenderprogrammeinheit handeln.

Mit Hilfe der externen Eingabeeinheit lassen sich beispielsweise von einem Filialleiter filialspezifische Daten erzeugen, die lokale Besonderheiten berücksichtigen und in den Dispositionsvorschlag mit einfließen sollen. So ist es denkbar, im Zuge einer geplanten Werbemaßnahme die Bestellmenge der ausgewählten Ware gezielt heraufzusetzen. Ebenso lassen sich lokale Besonderheiten wie beispielsweise verkaufsoffene Sonntage aber auch regionale Feiertage hierdurch abbilden. Ebenso kann die besondere Konkurrenzsituation im Vergleich zu anderen Anbietern Berücksichtigung finden.

Mit Hilfe der Uhr respektive Funkuhr als externer Sensor werden die einzelnen Verkäufe an ausgewählten Waren mit dem gewünschten Verkaufszeitpunkt flankiert und lassen sich auch die einzelnen Kassieranlagen zeitlich synchronisieren. Der Temperatursensor gibt Aufschluss über das lokale Wetter am Ort der Filiale ebenso wie der Feuchtesensor eine Regenwahrscheinlichkeit ermitteln lässt. Hierbei macht sich die Erfindung die Erkenntnis zu Nutze, dass bestimmte Waren und ihre Verkaufsmenge vom örtlichen Wetter abhängen. In diesem Zusammenhang kann über die externe Eingabeeinheit auch eine Wetterprognose für die nächsten Tage mit in die filialspezifischen Daten einfließen. Denkbar ist es an dieser Stelle, dass eine Wetterprognoseeinheit bzw, filialspezifische Wetterprogrammeinheit alternativ oder zusätzlich als (externer) Sensor realisiert ist, mit deren Hilfe das zu erwartende regionale Wetter am Ort der Filiale innerhalb der nächsten Tage Berücksichtigung findet und in die filialspezifischen Daten einfließt. Genauso gut können hiermit die aktuellen Wetterdaten von einer Datenbank abgefragt werden. Ähnlich arbeitet eine filialspezifische Kalenderprogrammeinheit.

Schlussendlich kommt als (externer) Sensor auch ein Zeiterfassungsgerät bei Bedarf zum Einsatz. Dieses Zeiterfassungsgerät berücksichtigt An- und Abwesenheitszeiten des Personals innerhalb der Filiale, was ggf. Einfluss auf den Dispositionsvorschlag hat oder haben kann. Denn je nach vorhandenem Personal wird man beispielsweise mit besonderen Aktionen den Abverkauf ausgewählter Waren stimulieren können oder eben nicht.

Jedenfalls spiegeln die filialspezfischen Daten und ein daraus abgeleiteter Filialdatensatz praktisch sämtliche Faktoren wider, die die zu erwartende Verkaufsmenge einer ausgewählten Ware aktuell und in Zukunft beeinflussen oder beeinflussen können. Hierzu trägt insbesondere auch ein gleichsam lokaler Kalender bei, welcher für die jeweilige Filiale erzeugt werden kann, und zwar entweder mit Hilfe der externen Eingabeeinheit oder unter Rückgriff auf die Kalenderprogrammeinheit, die als Sensor mit den entsprechenden Daten (von der Zentrale oder einer anderen Datenbank) gefüttert wird.

Aus diesen umfassenden Informationen, also den warenspezifischen Daten respektive dem Warendatensatz und den filialspezifischen Daten respektive dem Filialdatensatz, leitet die Zentrale nun den Dispositionsvorschlag her und gibt diesen als gleichsam Ergebnis der Datenerfassung und -verarbeitung an die einzelnen Filialen wieder zurück. Der Dispositionsvorschlag korelliert die beiden Datensätze und berechnet hieraus für die spezifische Filiale und einen ausgewählten Zeitraum (beispielsweise für einen Tag, mehrere Tage, eine Woche) den zu erwartenden Bedarf an der ausgewählten Ware. Das heißt, der Dispositionsvorschlag mündet in eine vorgeschlagene Bestellmenge für die ausgewählte Ware unter Berücksichtigung des zukünftigen Verkaufszeitraumes. Das heißt, der Dispositionsvorschlag erfolgt regelmäßig wochentag- und kalenderabhängig sowie filialspezifisch.

Hierbei geht die Erfindung von der Erkenntnis aus, dass beispielsweise am Wochenende die Verkaufsmenge ausgewählter Waren generell höher liegt als am Wochenanfang. Folgerichtig muss der Dispositionsvorschlag die wochentagabhängige Schwankung der Verkaufsmenge berücksichtigen. Ebenso fließen natürlich in den Dispositionsvorschlag die zuvor bereits erläuterten variablen Faktoren wie das Wetter am Ort der Filiale, kalendarische Besonderheiten, personelle Ausstattung der Filiale, Verfügbarkeit und Verfallszeit der ausgewählten Ware (Gebrauchsdauer) ein. Darüber hinaus werden für den Dispositionsvorschlag weitere Daten wie der zu erwartende Preis der ausgewählten Ware oder auch die örtliche Konkurrenzsituation berücksichtigt.

Jedenfalls dient der diese sämtlichen Eingangsgrößen berücksichtigende Dispositionsvorschlag dazu, einen Filialleiter in der betreffenden Filiale in die Lage zu versetzen, seine Bestellmenge für die ausgewählte Ware in einer Art und Weise optimieren zu können, wie dies bisher nicht für möglich gehalten wurde. Eine solche Bestellmengenoptimierurtg bzw. der damit zusammenhängende Dispositionsvorschlag ist auch insofern von Bedeutung, als er auf Basis objektiver Daten erfolgt und grundsätzlich personenunabhängig unterbreitet wird. Damit trägt die Erfindung den aktuell ausgedehnten Laden-öffnungszeiten Rechnung und berücksichtigt, dass auf Basis des Dispositionsvorschlages ausgesprochene Bestellungen der jeweiligen Filiale nicht mehr nur von einer Person gemacht werden können und müssen.

Vielmehr wird dem jeweiligen Entscheidungsträger eine zuverlässige Orientierungshilfe an die Hand gegeben, die er für seine Bestellungen nutzt und auch nutzen kann. Der Dispositionsvorschlag berücksichtigt dabei auch und insbesondere filialspezfische Besonderheiten, die in der vorgeschlagenen Bestellmenge für die jeweils ausgewählte Ware Berücksichtigung finden.

Um dies im Detail zu erreichen, werden der jeweilige Warendatensatz und der Filialdatensatz an die Zentrale übermittelt und dort ausgewertet. Aus dem Filialdatensatz und dem Warendatensatz leitet die Zentrale dann den Dispositionsvorschlag für die ausgewählte Ware ab und übermittelt diesen Dispositionsvorschlag an die jeweils spezifische Filiale zurück. Das heißt, es wird ein Dispositionsvorschlag unterbreitet, der nicht nur wochentagabhängig variiert, sondern auch und insbesondere von Filiale zu Filiale und die jeweils lokalen Besonderheiten berücksichtigt. Darüber hinaus spiegelt der Dispositionsvorschlag natürlich die spezielle Verfügbarkertssituation, den Preis usw. der jeweils ausgewählten Ware wider.

Des Weiteren berücksichtigt der Disposüionsvorschlag in der Regel einen tageszeitabhängigen und/oder kalendarischen Warenüberhang der ausgewählten Ware. Dieser Warenüberhang fließt allgemein in den Servicegrad mit ein und drückt insgesamt die Verfügbarkeit der ausgewählten Ware zu einer bestimmten Tageszeit aus. Meistens wird hier mit Prozentzahlen gearbeitet, die letztlich die Wahrscheinlichkeit wiedergeben, zu einer bestimmten Uhrzeit während der Ladenöffnung die ausgewählte Ware in einer vorgegebenen Menge anzutreffen. Das heißt, der Servicegrad errechnet sich aus der Anzahl der Tage mit einer Verfügbarkeit der ausgewählten Ware bis zu einem bestimmten Zeitpunkt (beispielsweise eine Stunde vor Ladenschluss), geteilt durch die Anzahl der Tage, an welchen die betreffende Ware überhaupt verkauft wird.

Jedenfalls berücksichtigt der Warenüberhang den Wunsch potentieller Kunden, beispielsweise auch noch kurz vor Warenschluss eine ausgewählte Ware einkaufen zu können. Hierbei berücksichtigt die Erfindung die aus der Praxis bekannte Tatsache, dass eine nicht oder nicht ausreichend gegebene Warenverfügbarkeft zur Kundenunzufriedenheit führt und letztlich dazu, dass ein Kunde die Filiale zukünftig möglicherweise nicht mehr aufsucht. Jedenfalls berücksichtigt der Dispositionsvorschlag einen solchen tageszeitabhängigen und/oder kalendarischen Warenüberhang der ausgewählten Ware.

Der tageszeitabhängige Warenüberhang drückt beispielsweise bei einer Eintages-Ware aus, dass diese lediglich mit einer Gebrauchsdauer von einem Tag ausgerüstete Ware über die Tageszeit gesehen und innerhalb der Ladenöffnungszeit in einer bestimmten prognostizierten Anzahl vorhanden sein muss, um einen vorgegebenen Servicegrad zu erreichen. Im Gegenzug stellt der Dispositionsvorschlag natürlich gleichzeitig sicher, dass der Warenüberhang der ausgewählten Ware nicht zu groß ist, um den Verlust durch unverkaufte Ware so gering wie möglich einzustellen. Das lässt sich über den Einkaufspreis respektive Verkaufspreis der betreffenden Ware abbilden, welcher in den warenspezifischen Daten bzw. dem Warendatensatz seinen Niederschlag findet.

Darüber hinaus schlägt die Erfindung vor, die warenspezifischen Daten bzw. den Warendatensatz einer ausgewählten Ware mit den warenspezfischen Daten bzw. dem Warendatensatz einer anderen ausgewählten Ware im Hinblick auf vergleichbare zeitabhängige Verkaufsmengen zu vergleichen. Das heißt, die beiden zugehörigen Warendatensätze werden im Hinblick auf ihre zeitabhängigen Verkaufsmengen und unter Berücksichtigung einer vorgegebenen Abweichung verglichen. Unterschreitet die Abweichung einen vorgegebenen Wert, so lassen sich die betreffenden Waren zu Warenclustern mit ähnlichem Verkaufsverhalten in der Zentrale zusammenfassen.

Beispielsweise hat es sich gezeigt, dass bei Obst und Gemüse als ausgewählte Waren Orangen und Kräuter oder auch Kiwi und Ananas ein vergleichbares Verhalten der Verkaufsmenge über einen Tag gesehen zeigen. Diese so genannten Warencluster lassen sich filialübergreifend in der Zentrale definieren und ermitteln bzw. können natürlich auch filialabhängig bestimmt werden.

Jedenfalls stellt die mögliche Zusammenfassung einzelner ausgewählter Waren zu ggf. filialabhängigen Warenclustern aufgrund ihrer weitestgehend übereinstimmenden zeitabhängigen Verkaufsmengen eine Erleichterung bei der Erstellung des Dispositionsvorschlages dar bzw. stellt diesen auf eine breitere Basis. Darüber hinaus besteht die Möglichkeit, einzelne Tage mit vergleichbaren Verkaufsmengen bzw. ähnlichem Verkaufsverhalten über die Zeit gesehen zusammenzufassen. Dann werden beispielsweise Tagescluster gebildet, die wiederum filialübergreifend oder auch filialspezifisch definiert werden. So mag das Verkaufsverhalten in einer bestimmten Filiale an den Tagen Dienstag (Di) und Donnerstag (Do) ähnlich sein, so dass sich hieraus relativ zuverlässige Prognosen ableiten lassen. Jedenfalls können die Tage, die Waren oder sogar ganze Filialen zu Tagesclustern, Warenclustern, Filialclustern etc. zusammengefasst werden, was insgesamt die Genauigkeit des Dispositionsvorschlages und damit einer Prognose deutlich erhöht.

Im Ergebnis lässt sich mit Hilfe der erfindungsgemäß erzeugten Daten respektive auf Basis des Warendatensatzes und des Filialdatensatzes eine spezifische und zu erwartende Verkaufsmenge einer ausgewählten Ware für eine bestimmte Filiale an einem vorher festgelegten (kalendarischen) Wochentag mit relativ großer Genauigkeit voraussagen. Dem Entscheidungsträger wird hierdurch eine geeignete Entscheidungshilfe an die Hand gegeben, um auf dieser Basis seine Bestellung für den nächsten Wochentag, die beiden nächsten Wochentage oder einen anderen Zeitraum zu tätigen.

Dabei haben sich dieses Modell und die darin berücksichtigten Daten als besonders vorteilhaft in Verbindung mit verderblichen Waren herausgestellt. Denn solche verderblichen Waren wie insbesondere Obst und Gemüse sind mit zum Teil großen Verlusten verbunden, falls die bestellte Menge mit der tatsächlich abverkauften Menge nicht übereinstimmt und ein großer Warenüberhang verloren ist. Genauso negativ zu beurteilen ist eine zu geringe Menge derartiger Waren, weil dadurch die Kundenzufriedenheit drastisch sinkt.

Jedenfalls öffnet die Erfindung zum ersten Mal, dass sich mit Hilfe der gewonnenen Daten ein belastbarer Dispositionsvorschlag machen lassen und als Entscheidungshilfe zur Verfügung gestellt werden kann. - Gegenstand der Erfindung ist auch eine Vorrichtung, wie sie zur Steuerung des Warenstromes und insbesondere zur Durchführung des beschriebenen Verfahrens besonders vorteilhaft eingesetzt werden kann. Diese Vorrichtung wird im Anspruch 12 beschrieben, wobei sich in den Ansprüchen 13 ff. vorteilhafte Ausgestaltungen dieser Vorrichtung anschließen.

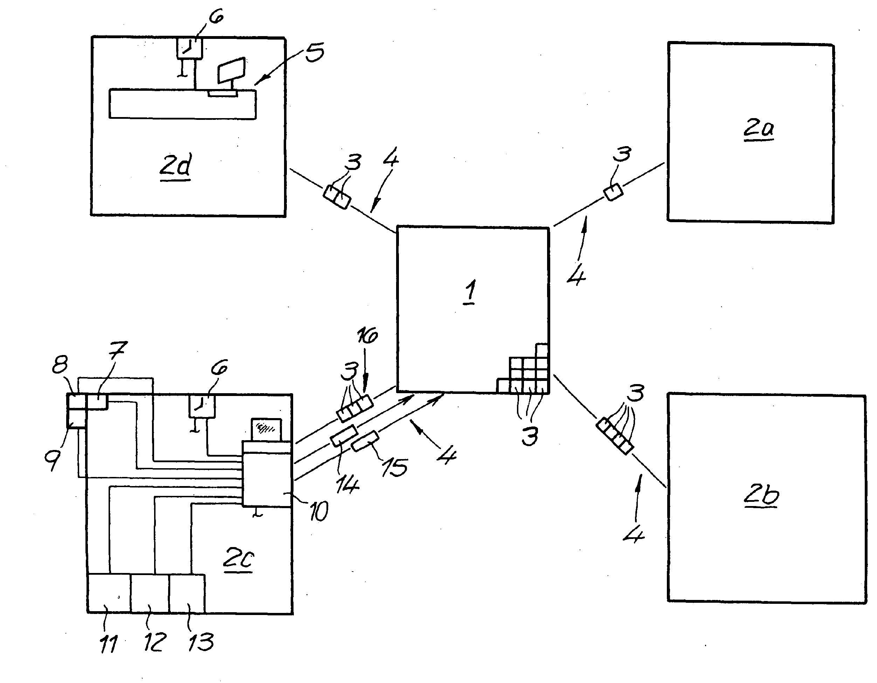

Im Folgenden wird die Erfindung anhand einer lediglich ein Ausführungsbeispiel darstellenden Zeichnung näher erläutert. Die einzige Figur zeigt eine Vorrichtung zur Steuerung des Warenstromes von einer Zentrale 1 zu mehreren im Vergleich zur Zentrale 1 örtlich entfernten Filialen 2a, 2b, 2c und 2d.

Tatsächlich erkennt man in der Figur eine Zentrale 1, die als Zentrallager für Waren 3 ausgebildet ist oder ein solches Zentrallager beinhaltet. Bei den Waren 3 handelt es sich im Ausführungsbeispiel und nicht einschränkend um Erdbeeren, wobei eine bestimmte genormte Menge an Erdbeeren durch ein Kästchen gleicher Größe dargestellt ist. Die Filialen 2a bis 2c sind jeweils als Ladenlokale ausgelegt.

Man erkennt, dass die Zentrale 1 und die Filialen 2a, 2b, 2c und 2d daten- und verkehrstechnisch miteinander verbunden sind. Die datentechnische Verbindung kann beispielsweise über einzelne Leitungen 4 erfolgen, bei denen es sich um Telefonleitungen, lnternetleitungen etc. handeln mag. Selbstverständlich wird auch eine drahtlose datentechnische Verbindung zwischen der Zentrale 1 und den Filialen 2a, 2b, 2c und 2d von der Erfindung umfasst.

Im Rahmen des Beispiels werden ausgewählte Waren, im Ausführungsbeispiel die Erdbeeren 3, mittels einer Warenerfassanlage 5 in der betreffenden Filiale 2a bis 2d im Hinblick auf ihre warenspezifischen Daten ausgewertet. Bei der Warenerfassanlage 5, die lediglich mit Bezug auf die Filiale 2d angedeutet ist, handelt es sich um eine Kassieranlage 5, die in der Regel mit einem Scanner ausgerüstet ist, um einen aufgebrachten Barcode an den ausgewählten Waren bzw. den Erdbeeren 3 im Beispielfall auslesen zu können. Selbstverständlich können auch mehrere Kassieranlagen 5 je Filiale 2a bis 2 d realisiert werden und die Warenerfassanlage 5 definieren. Das ist jedoch nicht dargestellt.

Mit Blick auf die übrigen Filialen 2a bis 2c erkennt man noch Sensoren 6 bis 13, die extern, das heißt außerhalb der Warenerfassanlage respektive der Kassieranlage 5 aber innerhalb respektive in der Nähe der betreffenden Filiale 2c im Beispielfall verwirklicht sind. Bei diesen Sensoren 6 bis 13 handelt es sich um eine Uhr respektive Funkuhr 6, die beispielsweise zur zeitlichen Synchronisation mehrerer Kassieranlagen 5 innerhalb einer Filiale 2a bis 2d dient. Darüber hinaus sind ein beispielsweise außerhalb der Filiale 2c im gezeigten Beispiel angebrachter Temperatursensor 8 und ein Temperatursensor 7 im Innern vorgesehen, mit dessen Hilfe die lokale Temperatur am Ort der Filiale 2c ermittelt werden kann. Zu den Sensoren 6 bis 13 gehört ferner ein Feuchtesensor 9, mit dessen Hilfe die relative Luftfeuchtigkeit erfasst werden kann.

Des Weiteren wird eine Eingabeeinheit 10 umfasst, mit deren Hilfe zunächst einmal die Daten der sämtlichen Sensoren 6 bis 13 gesammelt werden können und im Übrigen diese Daten mit flankierenden Eingaben versehen werden können. Ferner gehören zu den Sensoren 6 bis 13 noch ein Zeiterfassungsgerät 13 sowie eine Wetterprogrammeinheit 11 und schließlich eine Kalenderprogrammeinheit 12. Mit Hilfe des Zeiterfassungsgerätes 13 werden An- und Abwesenheitszeiten von Mitarbeitern innerhalb der betreffenden Filiale 2c erfasst. Die Wetterprogrammeinheit 11 stellt Wetterprognosedaten für einen bestimmten Zeitraum, beispielsweise einen Tag, zwei Tage bis zu einer Woche zur Verfügung bzw. gibt das lokale Wetter an. Mit Hilfe der Kalenderprogrammeinheit 12 lassen sich lokale kalendarische Besonderheiten abbilden, wie beispielsweise ein am Ort der Filiale 2c zu beachtender regionaler Feiertag, die örtlichen Schulferien, verkaufsoffene Sonntage, besondere regionale Festlichkeiten etc..

Auf diese Weise stellt die als Ladenlokal ausgebildete und im Beispielfall betrachtete Filiale 2c umfassendes Datenmaterial zur Verfügung, das als filialspezifische Daten Berücksichtigung findet und Eingang in einen Filialdatensatz 14 findet. Neben diesem Filialdatensatz 14, welcher die vorgenannten und mit Hilfe der Sensoren 6 bis 13 ermittelten filialspezifischen Daten abbildet, steht in der betreffenden Filiale 2c auch noch ein Warendatensatz 15 zur Verfügung, welcher warenspezifische Daten abbildet.

Bei diesen warenspezifischen Daten handelt es sich um die Produktart (Erdbeeren 3 im Beispielfall) und die Verkaufsmenge pro Zeiteinheit, beispielsweise die Anzahl der verkauften Erdbeeren 3 pro Stunde an einem bestimmten Kalendertag. Darüber hinaus mag in dem Warendatensatz 15 noch die Artikelnummer für das betreffende Produkt bzw. die ausgewählte Ware (Erdbeeren 3) hinterlegt sein. Ferner der Preis der Ware sowie der Verkaufszeitpunkt, welcher von der Uhr 6 vorgegeben bzw. mit dieser synchronisiert wird. Schlussendlich gibt der Warendatensatz 15 auch noch Auskunft über die Gebrauchsdauer der ausgewählten Ware bzw. der Erdbeeren 3 im Beispielfall. Diese Gebrauchsdauer ist in der Regel mit zwei Werten flankiert, einerseits für die Lebensdauer der betreffenden Ware bzw. der Erdbeeren 3 respektive ihre maximal mögliche Verkaufsdauer (1 Tag im Beispielfall). Darüber hinaus drückt die Gebrauchsdauer die jahreszeitliche Verfügbarkeit der ausgewählten Ware (Erdbeeren 3) aus, beispielsweise in dem Sinne, dass hier eine Restverfügbarkeit von zwei Wochen hinterlegt ist, weil die Erdbeersaison in Kürze beendet wird.

Im Rahmen der Erfindung wird nun der Warendatensatz 15 in Verbindung mit dem Filialdatensatz 14 an die Zentrale 1 seitens der betrachteten Filiale 2c im Beispielfall über die zugehörige Leitung 4 übermittelt. Innerhalb der Zentrale 1 werden die beiden Datensätze 14, 15 ausgewertet, und zwar unter Anwendung beispielsweise eines stochastischen Dispositionsmodells. Als Folge der sämtlichen beschriebenen Eingangsdaten wird von der Zentrale 1 ein Dispositionsvorschlag 16 an die Filiale 2c im Beispielfall übermittelt. Dieser Dispositionsvorschlag 16 ist filialspezifisch sowie wochentagabhängig und selbstverständlich kalenderspezifisch ermittelt worden.

Bezogen auf die ausgewählte Ware, das heißt die Erdbeeren 3 im Beispielfall, bedeutet dies, dass beispielsweise für Dienstag, den 3. Juni bei der Filiale 2c eine verkaufte Menge an ausgewählten Waren bzw. Erdbeeren 3 erwartet wird, die der Menge an drei "Kästchen" Erdbeeren 3 in der Zeichnung entspricht. Für den gleichen Tag (Dienstag, den 3. Juni) mögen sich unter Berücksichtigung der Filiale 2b vier "Kästchen" an Erdbeeren 3 als erwartete Verkaufsmenge ergeben. In der Filiale 2a wird an diesem Tag nur ein "Kästchen" erwartet, wohingegen für die Filiale 2d die Verkaufsmenge zwei "Kästchen" betragen mag. Jedenfalls übermittelt die Zentrale 1 einen jeweils filialspezifischen und wochentagabhängigen Vorschlag an die jeweilige Filiale 2a bis 2d im Hinblick auf die ausgewählte Ware 3.

Dieser Dispositionsvorschlag 16 kann nun von dem Entscheidungsträger in der betreffenden Filiale 2a bis 2d in eine Bestellung an die Zentrale 1 umgesetzt werden. Diese Bestellung lässt sich beispielsweise über die Eingabeeinheit 10 an die Zentrale 1 übermitteln. Denn bei dieser Eingabeeinheit 10 handelt es sich um einen Rechner oder eine Computereinheit, welche nicht nur die sämtlichen Daten der Sensoren 6 bis 13 aufnimmt, sondern an die auch die in der Filiale 2c befindlichen Kassieranlagen 5 angeschlossen sind. Das heißt, in der Eingabeeinheit 10 werden sämtliche warenspezifischen und filialspezifischen Daten gesammelt und zusammengeführt sowie an die Zentrale 1 übermittelt. Ferner dient die Eingabeeinheit 10 zur Wiedergabe des Dispositionsvorschlages 1b von der Zentrale 1 und dazu, die Bestellung wie beschrieben zu tätigen.

Nach dem beschriebenen Bestellvorgang werden in der Zentrale 1 die für den betrachteten Kalendertag (Dienstag, 3. Juni) jeweils pro Filiale 2a bis 2d erwarteten Verkaufsmengen ("Kästchen" an Erdbeeren 3) konfektioniert und können unmittelbar im Anschluss hieran an die betreffende Filiale 2a bis 2d geliefert werden. Das geschieht meistens am Vorabend bzw. in der Nacht vor dem betrachteten Tag (Dienstag, 3. Juni).

## Patentansprüche

1. Verfahren zur Steuerung des Warenstromes von einer Zentrale (1) zu einer oder mehreren örtlich entfernten Filialen (2a bis 2d), wonach ausgewählte Waren (3) mittels einer Warenerfässanlage (5) in der betreffenden Filiale (2a bis 2d) im Hinblick auf ihre warenspezifischen Daten ausgewertet und in Verbindung mit filialspezifischen Daten in einen Dispositionsvorschlag (16) umgesetzt werden.

2. Verfahren nach Anspruch 1, **dadurch gekennzeichnet, dass** als warenspezifische Daten die Produktart und Verkaufsmenge, ggf. eine Artikelnummer und/oder der Preis und/oder der Verkaufszeitpunkt und/oder die Gebrauchsdauer der ausgewählten Ware (3) erfasst und in einem Warendatensatz (15) abgelegt werden.

3. Verfahren nach Anspruch 2, **dadurch gekennzeichnet, dass** die Gebrauchsdauer der ausgewählten Ware (3) sowohl Lebensdauerwerte als auch die jahreszeitliche Verfügbarkeit abbildet.

4. Verfahren nach einem der Ansprüche 1 bis 3, **dadurch gekennzeichnet, dass** als Warenerfassanlage (5) eine oder mehrere Kassieranlagen (5) in der Filiale (2a bis 2d) eingesetzt werden.

5. Verfahren nach einem der Ansprüche 1 bis 4, **dadurch gekennzeichnet, dass** die filialspezifischen Daten mittels Sensoren (6 bis 13) sowie ggf. durch eine externe Eingabe erzeugt und in einem Filialdatensatz (14) abgelegt werden.

6. Verfahren nach einem der Ansprüche 1 bis 5, **dadurch gekennzeichnet, dass** der Warendatensatz (15) und der Filialdatensatz (14) an die Zentrale (1) übermittelt und dort ausgewertet werden.

7. Verfahren nach einem der Ansprüche 1 bis 6, **dadurch gekennzeichnet, dass** die Zentrale (1) aus dem Filialdatensatz (14) und dem Warendatensatz (15) den Dispositionsvorschlag (16) für die ausgewählte Ware (3) ableitet und an die jeweilige Filiale (2a bis 2d) übermittelt.

8. Verfahren nach einem der Ansprüche 1 bis 7, **dadurch gekennzeichnet, dass** der Dispositionsvorschlag (16) einen tageszeitabhängigen und/oder kalendarischen Warenüberhang der ausgewählten Ware (3) berücksichtigt.

9. Verfahren nach einem der Ansprüche 1 bis 8, **dadurch gekennzeichnet, dass** die Zentrale (1) einen jeweils filialspezifischen und/oder wochentagabhängigen Dispositionsvorschlag (16) ermittelt.

10. Verfahren nach einem der Ansprüche 1 bis 9, **dadurch gekennzeichnet, dass** die warenspezifischen Daten einer ausgewählten Ware (3) mit den warenspezifischen Daten einer anderen ausgewählten Ware (3') im Hinblick auf vergleichbare zeitabhängige Verkaufsmengen verglichen werden.

11. Verfahren nach Anspruch 10, **dadurch gekennzeichnet, dass** je nach Übereinstimmung der zeitabhängigen Verkaufsmengen der zu vergleichenden Waren (3, 3') unter Berücksichtigung einer vorgegebenen Abweichung einzelne Waren (3, 3') zu filial- und/oder zeitabhängigen Warenclustern (3, 3') und/oder Tagesclustern (Di, Do) und/oder Filialclustern mit ähnlichem Verkaufsverhalten in der Zentrale (1) zusammengefasst werden.

12. Vorrichtung zur Steuerung des Warenstromes von einer Zentrale (1) zu einer oder mehreren örtlich entfernten Filialen (2a bis 2d), insbesondere zur Durchführung des Verfahrens nach einem der Ansprüche 1 bis 11, wobei die Zentrale (1) und die Filialen (2a bis 2d) daten- und verkehrstechnisch miteinander verbunden sind, und wobei ausgewählte Waren (3) mittels einer Warenerfassanlage (5) in der betreffenden Filiale (2a bis 2d) im Hinblick auf ihre warenspezifischen Daten ausgewertet und in Verbindung mit filialspezifischen Daten in einen Dispositionsvorschlag (16) umgesetzt werden.

13. Vorrichtung nach Anspruch 12, **dadurch gekennzeichnet, dass** die Warenerfassanlage (5) als eine oder mehrere Kassieranlagen (5) ausgebildet ist.

14. Vorrichtung nach Anspruch 12 oder 13, **dadurch gekennzeichnet, dass** die Filiale (2a bis 2d) Sensoren (6 bis 13), beispielsweise eine Uhr, insbesondere Funkuhr (6) und/oder einen Temperatursensor (7, 8) und/oder ein Zeiterfassungsgerät (13) und/oder einen Feuchtesensor (9) und/oder eine Eingabeeinheit (10) und/oder eine filialspezifsche Wetterprogrammeinheit (11) und/oder eine filialspezifische Kalenderprogrammeinheit (12) aufweist, um auf diese Weise filialspezifische Daten zu erzeugen.

15. Vorrichtung nach einem der Ansprüche 12 bis 14, **dadurch gekennzeichnet, dass** die Filiale (2a bis 2d) als Ladenlokal und die Zentrale (1) als Zentrallager ausgebildet ist oder ein solches aufweist.
